# EUROPEAN PATENT APPLICATION

(11) **EP 0 624 449 A2**
(43) Date of publication of application: **17.11.1994**
(21) Application number: 94106464.4
(22) Date of filing: 26.04.1994
(51) Int. Cl.: B29C 45/54, B29C 45/16

(54) **Method of molding plastic articles**

(30) Priority: 13.05.1993 US 59951
(71) Applicant: HUSKY INJECTION MOLDING SYSTEMS LTD., Bolton Ontario L7E 5S5 (CA)
(72) Inventor: Von Buren, Stefan, Toronto, Ontario M6S 3E2 (CA)
(74) Representative: Weiss, Peter, Dr. rer.nat.

(57) **Abstract**

Molten plastic is injected into a mold cavity via a hot runner system including at least one shooting pot (69,79). The flow of molten plastic is controlled via a ball check valve (66,82) including the steps of opening the ball check valve (66,82) via injection pressure in the inlet conduit (65,88), and closing the ball check valve (66,82) via injection pressure from the injection piston (71,81) in the shooting pot (69,79).

## Description

### FIELD OF THE INVENTION

The present invention relates to injecting molten plastic into a mold cavity via a hot runner system which includes a shooting pot, especially to coinjection to form hollow plastic articles and preforms having a layered structure.

### BACKGROUND OF THE INVENTION

The use of a control unit, such as a shooting pot in a hot runner system for molding plastic articles is well known and is highly advantageous, especially in the simultaneous or sequential injection (coinjection) of two or more resins into a mold cavity to develop layered wall structures. This is evidenced by U.S. Patents 4,775,308, 4,717,324, 4,863,369 and 4,863,665.

In an arrangement using a shooting pot, a primary resin source feeds the reservoir of the shooting pot and the shooting pot, in turn, is operated to feed a measured or metered quantity of resin into the mold cavity while the inlet to the shooting pot from the primary resin source is closed. For economic reasons, it is particularly advantageous to feed molten plastic into a plurality of mold cavities via the hot runner system using at least one shooting pot for each mold cavity.

Naturally, the larger the system, for example, a 48 cavity coinjection hot runner, the bulkier and more complex it is, especially using the advantageous shooting pots. Space is at a premium in such a large system, and accuracy is important.

It is therefore a principal objective of the present invention to provide a method for injection molding plastic articles using a hot runner system and at least one shooting pot, which is simple, compact and effective.

It is a particular object of the present invention to provide a method as aforesaid for coinjecting a plurality of hollow articles in a plurality of mold cavities using two shooting pots for each mold cavity.

Further objects and advantages of the present invention will appear hereinbelow.

### SUMMARY OF THE INVENTION

In accordance with the present invention it has now been found that the foregoing objects and advantages are readily obtained.

The present invention is an efficient and expeditious method of molding plastic articles, including preforms, bottles, containers and the like. The method of the present invention comprises: injection molding plastic into a mold cavity via a hot runner system including a conduit system therein with at least one shooting pot communicating with said conduit system; feeding molten plastic into said shooting pot from said conduit system via an inlet conduit of said conduit system, and feeding molten plastic from said shooting pot actuated by an injection piston in the shooting pot to the mold cavity via an outlet conduit of said conduit system; and controlling the flow of molten plastic via a check valve in the inlet conduit, especially a ball check valve, including the steps of opening the ball check valve to permit flow of molten plastic past the ball check valve via injection pressure in the inlet conduit, and closing the ball check valve to prevent flow of molten plastic past the ball check valve via injection pressure from the injection piston in the shooting pot.

The present invention also comprises a method for coinjecting two different molten plastic materials into said mold cavity via said conduit system, and providing two of said shooting pots per cavity, one each for each molten plastic material, including the step of controlling the flow of molten plastic for each of said shooting pots via ball check valves, wherein both ball check valves are separately opened via injection pressure in inlet conduits, and both ball check valves are separately closed via injection pressure from the injection pistons in said shooting pots.

A preferred embodiment includes the step of injecting polyethylene terephthalate (PET) as a first of said molten plastic materials, and injecting a barrier material as a second of said molten plastic materials. A further preferred embodiment includes the step of locating the ball check valve in a ball check valve body that forms the end of the shooting pot. A further preferred embodiment includes the step of injecting molten plastic from the shooting pot to the mold cavity by advancing an injection piston in the shooting pot, wherein the injection pressure from the injection piston in the shooting pot closes the ball check valve and prevents backflow of the molten plastic material.

It is particularly preferred to include the step of coinjecting said two different molten plastic materials into said mold cavity to form a layered molten plastic article.

As indicated herein, the present invention is particularly suitable for injecting molten plastic into a plurality of mold cavities via said hot runner system including two of the shooting pots for each mold cavity. Space is at a considerable premium in a multi-cavity manifold, particularly where coinjection is employed and where two shooting pots are employed for each mold cavity. In accordance with the process of the present invention, an efficient and expeditious procedure is employed which achieves a considerable savings of space without sacrificing product quality.

Further objects and advantages of the present invention will appear hereinbelow.

### BRIEF DESCRIPTION OF THE DRAWINGS

The present invention will be more readily understood from a consideration of the following illustrative drawings describing preferred embodiments.
Figure 1 is a schematic illustration of a hot runner system for a four cavity mold accommodating three thermoplastic resins with two shooting pots for each mold cavity;
Figure 2 is a sectional view illustrating details of a hot runner-nozzle-mold cavity system individual to each mold cavity of Figure 1;
Figure 3 is a detail view of a ball check valve in a closed position;
Figure 3A is an alternate embodiment similar to Figure 3;
Figure 4 is a detail view of the nozzle and mold cavity; and
Figure 5 is an enlarged sectional view showing the layered wall structure of the molded article.

### DETAILED DESCRIPTION OF THE PREFERRED EMBODIMENTS

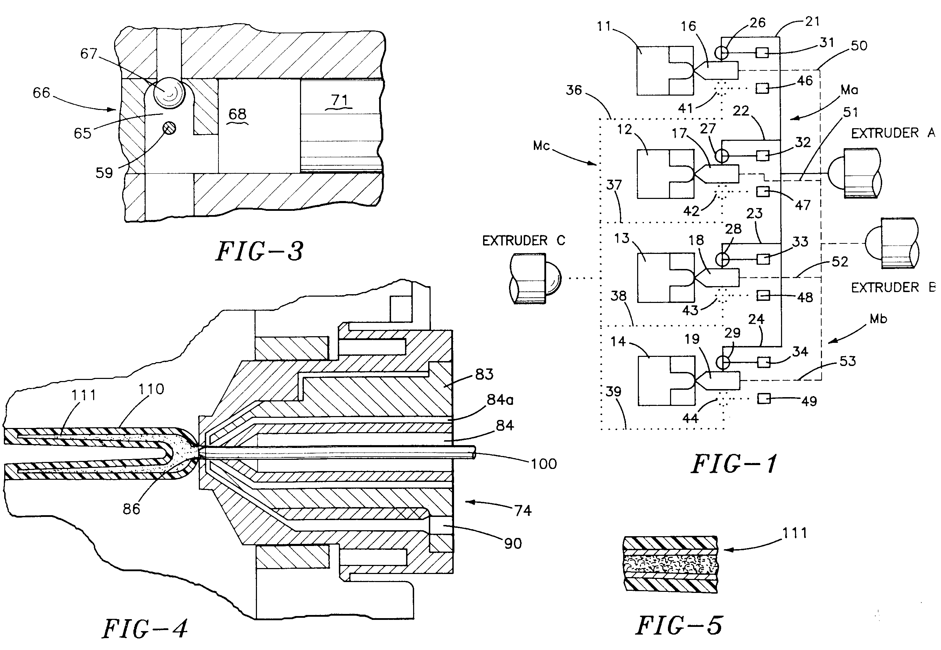

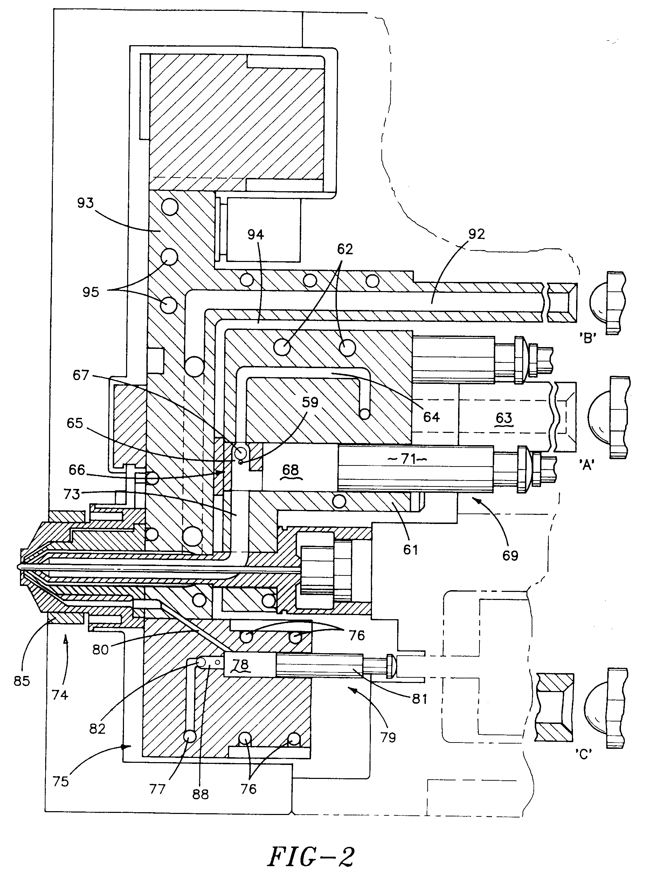

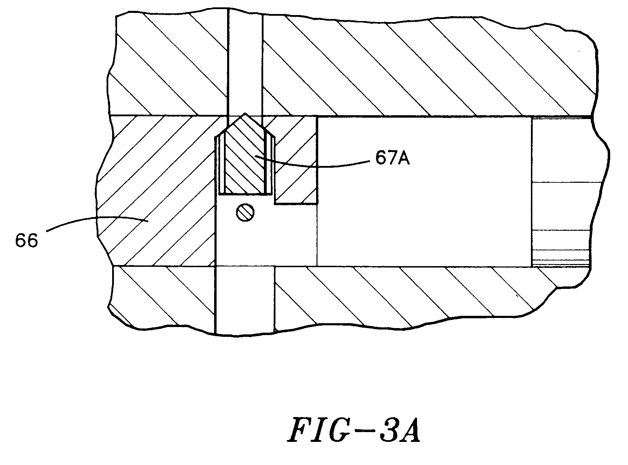

Referring now in detail to the drawings, the illustration of Figure 1 shows schematically a triple hot runner system which accommodates three thermoplastic resins suitable for use where each has different optimum processing temperatures. One resin is provided from a source identified as extruder A, a second resin is provided from a source labeled extruder B, and a third resin is provided from a source labeled extruder C.

While the present exemplary embodiment of the invention discloses three resin sources, it is naturally entirely within the spirit and scope of the invention to utilize more than three resin sources, or less than three resin sources.

The portion of the hot runner system leading from extruder A is shown in solid lines, that portion of the system originating with extruder B is shown in dashed lines, and that portion of the system originating with extruder C is shown in dotted lines.

In the embodiment of Figure 2, the sequence of injection is a first injection from shooting pot 69 of virgin PET to form the exterior surface of the article, a second injection from shooting pot 79 of a barrier resin, and a third injection from extruder B of a filler resin which may be reground PET or any other desired filler resin. If desired, one could have a fourth injection of virgin PET to finish the gate area and/or clean the nozzle melt area. Thus, it can be seen that three (3) separate lines are provided, at least two with their own temperature control to the nozzle, as shown for example in U.S. Patent 4,808,101.

For purposes of convenient explanation of the invention, and referring specifically to Figure 1, the portion of the hot runner system connected to extruder A (solid lines) for virgin PET is maintained by suitable heaters in well-known fashion at an elevated temperature ranging as, for example, from 470 to 550°F., the optimum processing temperature for a thermoplastic resin such as PET. The portion of the system connected to extruder C (dotted lines) for a barrier material, as for example, is maintained at a temperature ranging from 400 to 440°F., the optimum processing temperature for a thermoplastic resin such as EVOH. If the filler plastic is low density polyethylene, the portion of the system connected to extruder B (dashed lines) is maintained at a temperature ranging from 350 to 400°F, whereas, if the filler plastic is reground PET, the portion of the system connected to extruder B is maintained at a temperature ranging from 470 to 550°F. It is to be noted that the resin selected and their optimum processing temperatures are merely exemplary of the present invention and their use in the present description is not intended to limit the invention to those specific resins described above.

Referring further to Figure 1, the reference numerals 11, 12 and 13 and 14 designate four mold cavities each communicating with individual nozzles 16, 17, 18 and 19. Naturally, the number of cavities will vary depending upon the desired system.

Extruder A supplies a heated manifold Mₐ with for example virgin PET which, in turn, communicates with each nozzle 16, 17, 18 and 19 via hot runners or channels 21, 22, 23 and 24, respectively. The reference numerals 26, 27, 28 and 29 designate ball check valves, the operation of which will be described hereinbelow, which operate to control the flow of molten plastic to and from the shooting pots or injection cylinders 31, 32, 33 and 34.

Correspondingly, hot manifold M_{c} supplies for example EVOH leading from extruder C to each nozzle 16, 17, 18 and 19 via hot runners or channels 36, 37, 38 and 39. Ball check valves 41, 42, 43 and 44 control the flow of molten plastic to and from shooting pots 46, 47, 48 and 49. Hot manifold M_{B}, supplying for example reground PET, polyethylene, or polypropylene, leads from extruder B directly to each nozzle 16, 17, 18, 19 via hot runners 50, 51, 52 and 53. It is noted that extruder B leads directly to the nozzles without the use of shooting pots, although shooting pots could of course be used.

While the schematic of Figure 1 shows a hot runner system leading from three sources (extruders A, B and C) transporting conditioned thermoplastic resins to a four cavity mold, it is entirely within the scope and capability of the present invention to service an unlimited number of cavities with resins originating from at least one source and desirably from three or more sources.

Figure 2 is a section of the hot runner system in the immediate vicinity of any one of the four nozzle-cavity assemblies of Figure 1, e.g., cavity 11 and nozzle 16, for example and is described in connection with an exemplificative embodiment.

A central manifold block 61 maintained at an operating temperature from 470-550°F for virgin PET by heating elements 62-62 contains a hot runner system therein receiving plasticized resin from extruder A through conduit channels 63 and 64. Conduit channel 64 feeds molten resin to inlet conduit 65 which charges reservoir 68 of the shooting pot or injection cylinder 69 equipped with an injection piston or charging piston 71. The back-flow of molten plastic from the shooting pot 69 toward extruder A is controlled by ball check valve body 66 and the ball 67, shown in Figure 2 in the open position permitting the flow of molten plastic past the ball 67 and into the reservoir 68 of shooting pot 69, and in Figure 3 shown in the closed position preventing flow past the ball 67. Desirably, ball 67 is located in ball check valve body 66 which forms the end of reservoir 68.

Reservoir 68 communicates with outlet conduit 73 which leads to the nozzle assembly generally indicated by reference numeral 74, and from the nozzle assembly to mold cavity 110, shown in Figure 4.

Heating elements 62-62 maintain the desired processing temperature of conduits 64 and 73. Heat conducted from manifold block 93 to a central portion of the nozzle assembly as well as heater 85 maintains the integrity of the desired temperature range within the nozzle.

Ball 67 of ball check valve 66 is opened to the position shown in Figure 2 by injection pressure in inlet conduit 64, with stop 59 holding ball 67 in the desired open position. Feeding molten plastic through inlet conduit 65 operates to feed molten plastic into reservoir 68 of shooting pot 69 and also to nozzle conduit 84 in nozzle 74 via outlet conduit 73.

Ball check valve body 66 is located upstream of shooting pot 69 and prevents backflow of resin when injection piston 71 advances and injects resin to nozzle conduit 84 via outlet conduit 73. The injection pressure from injection piston 71 operates to move the ball 67 to the position shown in Figure 3 and thus prevents backflow. It can be readily seen that the ball check valve operates easily and expeditiously with a minimum of space in the manifold.

Figure 3A shows an alternate embodiment similar to Figure 3 wherein check valve body 66 includes poppet 67A which operates in a manner similar to ball 67.

A manifold segment 75 secured to manifold block 93 is heated by elements 76-76 to maintain optimum temperature of 400°F for EVOH in the hot runner connecting extruder C to conduit channel 77 leading to inlet conduit 88 which leads to the reservoir 78 of a second shooting pot 79 equipped with an injection or charging piston 81.

Hereagain, a ball 82 (shown in Figure 2 in the closed position) prevents backflow of molten plastic from the shooting pot 79 toward extruder C. In the closed position of the ball 82, the reservoir 78 communicates with the nozzle assembly 74 via channel 80 which leads directly from reservoir 78. When the ball 82 is open by injection pressure in inlet conduit 77, i.e., moved forward, molten plastic can flow from the inlet conduit and conduit channel to reservoir 78. Injection pressure from second shooting pot 79 and injection piston 81 serves to close the ball check valve in the same manner as with the first shooting pot, i.e., move ball 82 rearward or upstream, and hence prevent backflow of resin.

Thus, forward movement of piston 81 operates to close valve 82 automatically and at the same time feed molten plastic, in this case EVOH, via outlet conduit 80 to injection nozzle 74 and mold cavity 110. The nozzle assembly 74 (see Figure 4) includes a central spigot 83 in thermal contact with manifold block 93 immediately adjacent local heating elements 95-95.

The spigot 83, fabricated preferably of a good metallic thermal conductor such as beryllium copper, is formed with through channels 84 and 84a through which flow material from extruders A and B to the nozzle gate 86 and thence to mold cavity 110 to form multilayered hollow plastic article 111, with the layers thereof shown in the enlarged sectional view of Figure 5.

Extruder B transfers material via channel 92 in manifold block 93 directly to nozzle channel 84a in spigot portion 83. Manifold 93 is insulated from manifold 61 by space 94 and has its temperature controlled separately therefrom by heaters 95-95. This enables independent temperature control of the resin from extruder B all the way to the nozzle. Extruder A transfers material via channels 64 and 73 to nozzle channel 84. Extruder C transfers material via channels 77 and 80 to nozzle channel 90.

After article 111 has been molded, valve stem 100 is moved to close nozzle gate 86, pistons 71 and 81 are moved rearwardly by plastic pressure, article 111 is removed and the cycle repeated.

In accordance with the foregoing process, an efficient and expeditious procedure is provided which can effectively utilize a plurality of shooting pots in a hot runner system with a plurality of mold cavities. The ball check valve requires some backflow to cause the ball to move and seal the channel. Inevitably, there is some leakage past the valve, upstream, until it is closed; consequently the accuracy of the volume of resin injected is suspect if this upstream location is not consistent on each cycle. However, surprisingly, tests of this procedure have shown that in coinjection molding especially where shot accuracy is important, the small leakage to drive the ball check valve is not a factor in maintaining shot quality. Significantly, the process of the present invention improves the entire economics of the system, especially in coinjection using a hot runner system with a plurality of mold cavities.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its spirit and scope as defined by the claims.

## Claims

1. A method of molding plastic articles (111), which comprises: injection molten plastic into a mold cavity (11-14, 110) from an extruder (A, B, C) via a hot runner system (21-24, 36-39, 50-53) including a conduit system therein with at least one shooting pot (46-49, 69, 79) having a molten plastic reservoir (68, 78) between the extruder (A, B, C) and mold cavity (11-14, 110) communicating with said conduit system; feeding molten plastic into said shooting pot reservoir (68, 78) from said extruder (A, B, C) and conduit system via an inlet conduit (65, 88) of said conduit system, and feeding molten plastic from said shooting pot reservoir (68, 78) actuated by an injection system (71, 81) in the shooting pot (69, 79) to the mold cavity (110) via an outlet conduit (73, 80) of said conduit system; and controlling the flow of molten plastic via a check valve (26-29, 66, 82) in said inlet conduit (65, 88), including the steps of opening the check valve (66, 82) to permit flow of molten plastic past the check valve (66, 82) via injection pressure in the inlet conduit (65, 88), and closing the check valve (66, 82) to prevent flow of molten plastic past the check valve (66, 82) via injection pressure from said injection piston (71, 81) in the shooting pot (69, 79).

2. A method according to claim 1 wherein the check valve is a ball check valve (66, 82), including the step of moving a ball (67, 82) to open and close the ball check valve.

3. A method according to claim 2 including coinjecting two different molten plastic materials into said mold cavity (110) via said conduit system, and providing two of said shooting pots (69, 79) per cavity (110), one for each molten plastic material, including the steps of controlling the flow of molten plastic for each of said shooting pots via ball check valves (66, 82), wherein both ball check valves (66, 82) are separately opened via injection pressure in inlet conduits (65, 88) and both ball check valves (66, 82) are separately closed via injection pressure from the injection pistons (71, 81) in said shooting pots (69, 79).

4. A method according to claim 3 including the step of injeccting PET as a first of said molten plastic materials, and injecting a barrier material as a second of said molten plastic materials.

5. A method according to at least one of claims 1 - 4 including the step of providing that the check valve (66, 82) forms at least a portion of the shooting pot (69, 79).

6. A method according at least one of claims 1 - 4, including the step of locating the check valve (66, 82) in a check valve body that forms the end of the shooting pot (69, 79).

7. A method according to at least one of claims 1 - 6 including the step of injecting molten plastic from the shooting pot (69, 79) to the mold cavity (110) by advancing an injection piston (71, 81) in the shooting pot (69, 79), wherein the injection pressure from the injection piston (71, 82) in the shooting pot (69, 79) closes the ball check valve (66, 82) and prevents backflow of the molten plastic material.

8. A method according to at least one of claims 1 - 7 including the step of coinjection said two different molten plastic materials into said mold cavity (110) to form a layered molten plastic article (111).

9. A method according to at least one of claims 1 - 8 including the step of injecting molten plastic into a plurality of mold cavities (11-14, 110) via said hot runner system (21-34, 36-39, 50-53), including two of said shooting pots (69, 78) for each mold cavity (11-14, 110).

10. A method according to at least one of claims 1-9 including the steps of moving a poppet (67A) to open and close the check valve (66).
